**Europäisches Patentamt**

**European Patent Office**

**Office européen des brevets**

(19)

(11) Veröffentlichungsnummer: **0091004**

**B1**

(12) # EUROPÄISCHE PATENTSCHRIFT

(45) Veröffentlichungstag der Patentschrift:
8624/11.06.86

(51) Int. Cl.⁴: **F28F11/02, F16L55/12**

(21) Anmeldenummer: **83102851.9**

(22) Anmeldetag: **22.03.83**

(54) Rohrverschliesseinrichtung, insbesondere für Värmetauscherrohre

(30) Priorität: **01.04.82/DE 3212223**

(43) Veröffentlichungstag der Anmeldung:
**12.10.83/8341**

(45) Bekanntmachung des Hinweises auf die Patenterteilung:
**11.06.86/8624**

(84) Benannte Vertragsstaaten:
**CH DE FR LI NL SE**

(56) Entgegenhaltungen:
**EP A 0 005 670**
**CH A 496 294**
**DE C 113 129**
**FR A 2 010 425**
**US A 2 921 608**
**US A 2 974 685**

(73) Patentinhaber: ICH-DE-FR-LI-NL-SE
**KRAFTWERK UNION AKTIENGESELLSCHAFT**
**Wiesenstrasse 35**
**D-4330 Mülheim (Ruhr)/DE**

(72) Erfinder: **Weber, Robert/Esperstrasse 23/D.8521)1**
**Uttenreuth/DE Förner, Siegfried/Leipzigerstrasse**
**69/D-8520 Erlangen/DE**

(74) Vertreter. **Mehl, Ernst, Dipl.-Ing., et al**
**Postfach 22 01 76**
**D-8000 München 22/DE**

LIBER, STOCKHOLM 1986

## Beschreibung

Die Erfindung bezieht sich auf eine Rohrverschließeinrichtung, insbesondere für Wärmetauscherrohre, mit einem Rohrstopfen, der zur Erzeugung der abdichtenden Flächenpressung einen in seinem Außendurchmesser vergrößerbaren. Stopfenmantel und einen vom Stopfenmantel umgebenen Stopfenkern aufweist, wobei der relativ zum Stopfenkern verschiebliche Stopfenmantel als Dichtelemente koaxial über den Stopfenkern geschobene Stülpringe besitzt, die ausgehend von ihrer entspannten, kegelig eingestellten Form durch Relativverschiebung zwischen Stopfenmantel und -kern in eine abgeflachte Form bringbar und in ihrem Außendurchmesser vergrößerbar sind und mit einem in das jeweilige Wärmetauscherrohr einführbaren Setzwerkzeug für den Rohrstopfen, wobei das Setzwerkzeug mit dem Stopfenkern mittels einer lösbaren Haltestange gekuppelt und mit dem Stopfenmantel mittels einer von der Haltestange durchdrungenen Stützhülse in Eingriff bringbar ist und gas Setzwerkzeug zur Erzeugung einer axialen Relativverschiebung zwischen Haltestange und Stützhülse und damit zwischen Stopfenmantel und -kern mit Spannmitteln ausgerüstet ist.

Eine solche Rohrverschließeinrichtung ist durch die CH-A- 496 224 bekannt. Besondere Bedeutung haben derartige Rohrverschließeinrichtungen für nuklearische Anlagen, und hierbei für die Dampferzeuger von Druckwasserkernreaktoren. Hierbei kommt es darauf an, die aufgrund einer Wirbelstromprüfung mit entsprechenden Wirbelstrom-Prüfmanipulatoren als beschädigt ermittelten Dampferzeugerrohre abzudichten bzw. tot zu legen. Dabei haben mechanisch arbeitende Stopfensetzvorrichtungen im Vergleich zu sogenannten Sprengstopfen den Vorteil, daß sie für eine fernbediente Stopfensetzoperation besser geeignet sind. Ein besonderes Problem bei Rohrstopfen, die aufgrund einer Durchmesservergrößerung abdichten sollen, ist der sichere, absolut dichte Sitz des Rohr- bzw. Dichtstopfens, ohne daß die hierfür aufzuwendenden Stopfensetzkräfte zu groß werden, denn eine zu große Stopfensetzvorrichtung setzt wiederum entsprechend gewichtige, voluminöse Manipulatoren voraus. Ein weiteres Problem der Rohrstopfen besteht in ihrer Entfernung bzw. Demontage; in aller Regel ist dies nicht oder nur mit sehr großem Aufwand möglich, der von normalen Manipulatoren nicht zu beherrschen ist. Es müssen dann Sondereinsätze mit Sonderwerkzeug in der meist kontaminierten Primärkammer durchgeführt werden.

Durch die Europäische Anmeldung EP-A-0 00S 670 ist eine Reparatureinrichtung für die Wärmetauscherrohre eines Dampferzeugers bekannt, bei der ein dünnwandiges Einsetzrohr in das defekte Wärmetauscherrohr und in das Einsatzrohr ein Rohrstopfen eingeschoben wird, der tellerfederartige Stülpringe hat, die über eine Schraube flachgedrückt werden können. Flachgedrückt drücken sie das Einschubrohr gegen die Innenwand des Wärmetauscherrohres. Es kann dort über einen Stromstoß angeschweißt werden. Verunreinigungen oder Ablagerungen an der Innenwand des Wärmetauscherrohres, die kleine Undichtigkeiten erzeugen können, können bei dieser Einrichtung nicht mechanisch entfernt werden.

Durch die schweizerische Patentschrift 5 03 923 ist eine Vorrichtung zum Verschließen von Bohrungen bekannt, bei der der Stopfen über ein Setzwerkzeug in die Bohrung einführbar und mit der Rohrwandung dichtend in Eingriff bringbar ist. Für größere Rohrdurchmesser besteht dieser Rohrstopfen aus einer zylindrischen Hülse auf der als Dichtelemente zwei gegeneinander geneigte konische Stahlblechscheiben aufgefädelt sind. Die Stahlblechscheiben stützen sich an ihrem voneinander entfernten inneren Umfang an je einer Schulter der zylindrischen Hülse ab. Durch Aufeinanderzuschieben dieser Schultern - was beim Durchziehen eines konischen Stiftes und entsprechender plastischer Verformung der Hülse bewerkstelligt werden soll - werden die Fußpunkte der Stahlblechscheiben aufeinander zubewegt. Dadurch vergrößern sich ihre Durchmesser etwas. Die Stahlblechscheiben können so mit ihrem Außendurchmesser gegen die Rohrwandung gedrückt werden. Es ist eine Eigenart dieser Konstruktion, daß sich die Stahlblechscheiben radial in die Rohrwandung eindrücken. Bei verunreinigten Rohren kann dies dazu führen, daß beiderseits von harten Ablagerungen feine Undichtigkeiten zwischen Stahlblechscheiben und der Rohrwand bestehen bleiben. Auch ist wegen der plastischen Verformung der zylindrischen Hülse ein späteres Entfernen eines solchen Stopfens praktisch nicht mehr möglich.

Durch die französische Patentschrift 20 10 425 ist eine Rohrverschließeinrichtung bekanntgeworden, die speziell für den Einsatz an Dampferzeugern von Kernkraftwerken konzipiert worden ist. Diese Rohrverschließvorrichtung besitzt einen mehrteiligen Rohrstopfen. Dieser enthält einen im wesentlichen zylindrischen Stopfenkern, dessen eines Ende kopfartig verdickt ist und dessen anderes Ende ein Gewinde trägt. Über den Stopfenkern wird vor dem Einsetzen in das zu verschließende Wärmetauscherrohr, eine kegelförmig vorgeformte Ringscheibe so aufgefädelt, daß sie mit ihrem innern Durchmesser an der Schulter des Kopfes des Stopfenkerns anliegt. Hernach wird ein zylindrisches Teil über den Stopfenmantel geschoben und am äußeren Umfang der Ringscheibe zur Anlage gebracht. Sodann wird eine Beilagscheibe auf den Stopfenkern aufgefädelt und an dem zylindrischen Teil zur Anlage gebracht. Zur Verschließung des Wärmetauscherrohres braucht nach dem Einschieben des Kopfes und des zylindrischen Teils in das zu verschließende Wärmetauscherrohr nur noch eine Mutter auf das Gewinde des Stopfenkerns aufgeschraubt zu werden. Durch Anziehen der Mutter wird das auf den Stopfenkern aufgefädelte Zylinderstück gegen die Ringscheibe gepreßt, so daß diese in eine abgeflachte Form gedrückt wird. Durch die dabei erzwungene geringfügige Durchmesservergrößerung der Ringscheibe preßt sich diese dabei an den Innendurchmesser des Wärmetauscherrohres an, sofern ihr Außendurchmesser vorher nur geringfügig kleiner war als der Innendurchmesser des zu verschließenden Wärmetauscherrohres. Es ist eine Eigenart dieser Rohrverschließeinrichtung, daß sich bei Rohren, in denen sich während des Betriebs kleine mehr oder weniger feste Ablagerungen gebildet haben, beidseitig solcher Ablagerungen, im Bereich der sich anpressenden Ringscheiben kleine Undichtigkeiten bilden können, die das Ausschwemmen von radioaktiven Partikeln ermöglichen.

Auch bei der in dieser französischen Patentschrift 20 10 425 offenbarten Varianten mit zwei spiegelbildlich aneinanderliegenden kegelförmig vorgeformten Ringscheiben ist die Entstehung solcher Undichtigkeiten nicht gänzlich auszuschließen.

Der Erfindung liegt die Aufgabe zugrunde, eine Rohrverschließeinrichtung der eingangs genannten Art zu schaffen, mit der eine besonders zuverlässige Abdichtung erzielbar ist. Die Zuverlässigkeit der Abdichtung soll auch durch Ablagerungen in Rohrleitungen - wie sie bei zu verschließenden beschädigten Rohren im allgemeinen anzutreffen sind - nicht beeinträchtigt werden. Auch soll mit dieser Rohrverschließeinrichtung ein Entfernen des gesetzten Rohrstopfens, d.h. eine Aufhebung der Dichtverbindung und ein Herausziehen des Rohrstopfens ermöglicht werden.

Erfindungsgemäß wird die gestellte Aufgabe durch die im Kennzeichen des Anspruchs 1 angegebenen Merkmale gelöst. Infolge der Anlage des Innenumfangs der Stülpringe an Anschlagflächen des Stopfenmantels und der Anlage äußerer Bereiche der Stülpringe an vom Kopfteil des Stopfenkerns beeinflußte Anschlagflächen, erfolgt beim Herausziehen des Stopfenkerns eine schabende Bewegung des Außenumfangs der Stülpringe längs der Innenwandung des zu verschließenden Rohres, die ein Abschaben von Verunreinigungen und somit einen zuverlässigen dichten Sitz zur Folge hat. Diese Schabbewegung wird durch das aufeinander zuschieben mehrerer durch Stützringe axial beabstandeter Stülpringe noch verstärkt und auch bei bloßer Relativverschiebung von Stopfenkern und Stopfenmantel gewährleistet.

Vorteilhafte Weiterbildungen sind in den Unteransprüchen 2 bis 16 angegeben. Aufgrund ihrer elastisch-plastischen Verformbarkeit - als vorteilhafter Werkstoff für die Stülpringe hat sich die beispielsweise korrosionsbeständige Stahllegierung 1.4057 oder Inconel X 750 erwiesenwerden die Stülpringe bei Abflachung zwischen dem Stopfenmantel und dem Innenumfang des Wärmetauscherrohres derart verspannt. Dabei ergeben sich sehr hohe Flächenpressungen an den Dichtflächen des Innen- und Außenumfanges der Stülpringe und den entsprechenden Gegenflächen. Diese Flächenpressungen führen zu einer geringfügigen Eindrückung oder einem "Eingraben" am Innenumfang der Rohrwand, und dies ist zur 100%-igen Dichtwirkung auch erforderlich. Diese Verformung ist deshalb erwünscht. Sie bedeutet noch keine Beschädigung des Wärmetauscherrohres. Grundsätzlich läßt sich dieser günstige Dichteffekt bereits mit einem einzigen Stülpring erzielen. Aus Sicherheitsgründen ist es jedoch zweckmäßig, mindestens zwei axial zueinander beabstandete und koaxial auf dem Stopfenmantel gelagerte Stülpringe. vorzusehen. Eine bevorzugte Ausführungsform sieht einen Stapel von drei zueinander beabstandeten Stülpringen mit entsprechenden Stützscheiben vor. Diese Anordnung ergibt eine besonders gleichmäßige Belastung des Innenumfanges des Wärmetauscherrohres. Für besondere Anwendungsfälle können jedoch auch mehr als drei in Flucht bzw. koaxial zueinander angeordnete Stülpringe an einem Rohrstopfen vorgesehen werden. Als günstiger Kegelwinkel für die Stülpringe hat sich ein Winkel von etwa 30°, insbesondere 33° erwiesen, wobei der Außendurchmesser dieser Stülpringe etwa 19 mm und ihr Außendurchmesser etwa 11 mm betrug. Ihre Stärke betrug 1 mm. Die "Eingrabtiefe" der Stülpringe an ihrem Außenumfang beträgt wenige Zehntel mm. Die elastisch-plastische Verformbarkeit der Stülpringe und ihre Bemessung haben gemäß Anspruch 2 auch besondere Bedeutung für das Herausziehen der Rohrstopfen. Dabei sind die über den Stopfenmantel überstehenden Ringpartien der Stülpringe entgegen der Zugrichtung verformbar, wobei die sich in die axialen Stülpring-Zwischenräume umlegenden Ringpartien vom Rohrinnenumfang freikommen. Der Außenumfang der Stülpringe ist zweckmäßig kantig insbesondere rechtwinklig-kantig zu den Mantelflächen, weil sich dadurch einerseits eine Schabewirkung zum Sauber- und Freischaben der Dichtflächen und andererseits ein besonders inniger Dichtkontakt in der "eingegrabenen" Dichtposition ergibt. Die Innenumfangsflächen der Stülpringe können dagegen geringfügig abgerundet sein, wodurch auch ihre Schwenk- bzw. Stülp-Bewegung beim Flachpressen erleichtert wird.

Im folgenden wird anhand der Zeichnung, in der zwei Ausführungsbeispiele dargestellt sind, die Erfindung noch näher erläutert. Darin zeigt, teils in vereinfachter, schematischer Darstellung:

Fig. 1 zum Teil im Schnitt eine an einem Dampferzeugerrohrboden befestigte Rohrverschließeinrichtung;

Fig. 2 den Rohrstopfen nach Fig. 1 vergrößert und im Detail herausgezeichnet;

Fig. 3 die Einzelheit X aus Fig. 2;

Fig. 4 die Außenansicht des Rohrstopfens, verkleinert;

Fig. 5 einen einzelnen Stülpring im Schnitt;

Fig. 6 die auf den Gewindeschaft des Stopfenkerns aufschraubbare Haltemutter im Schnitt;

Fig. 7 den Schnitt längs der Linie VII-VII aus Fig.6, d.h., insbesondere die Sperrklinke der Haltemutter;

Fig. 8 die Draufsicht auf die Haltemutter mit ihrem Zahnkranz;

Fig. 9 einen Schnitt durch den Schaft des Stutzenkerns längs der Linie IX-IX aus Fig. 2;

Fig. 10 in entsprechender Darstellung zu Fig. 2 eine Rohrstopfenvariante ohne Bördelring an den Stützscheiben;

Fig. 11 die Einzelheit XI aus Fig. 10; und

Fig. 12 bis Fig. 14 in entsprechender Darstellung zu Fig. 11 drei weitere Varianten für den Rohrstopfen mit tellerfederartiger Anordnung der Stülpringe, und zwar

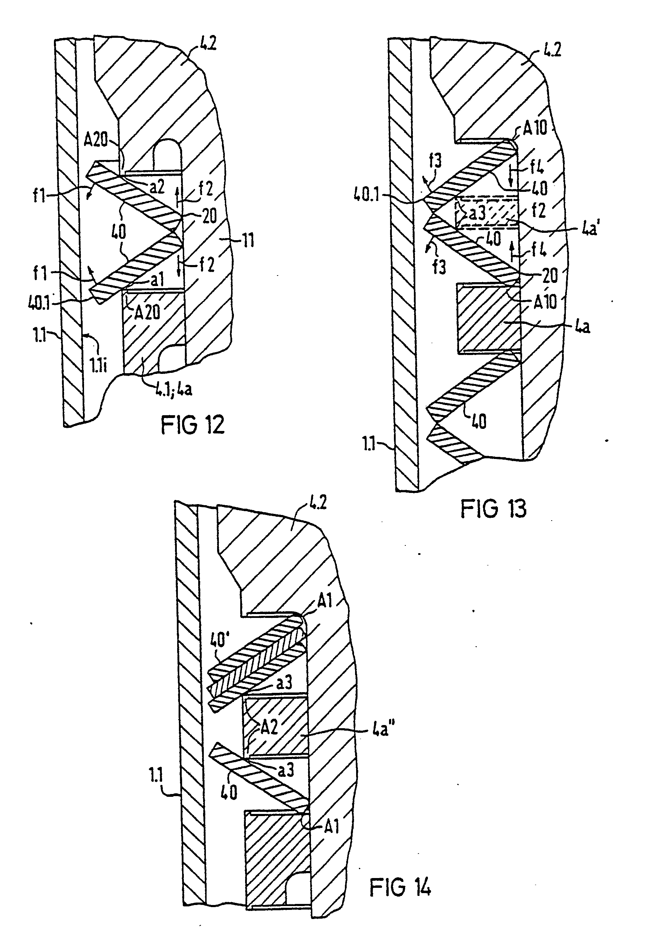

Fig. 12 mit einem nach außen aufgespreizten Doppel-Stülpring,

Fig. 13 mit nach innen aufgespreizten Doppel-Stülpringen und

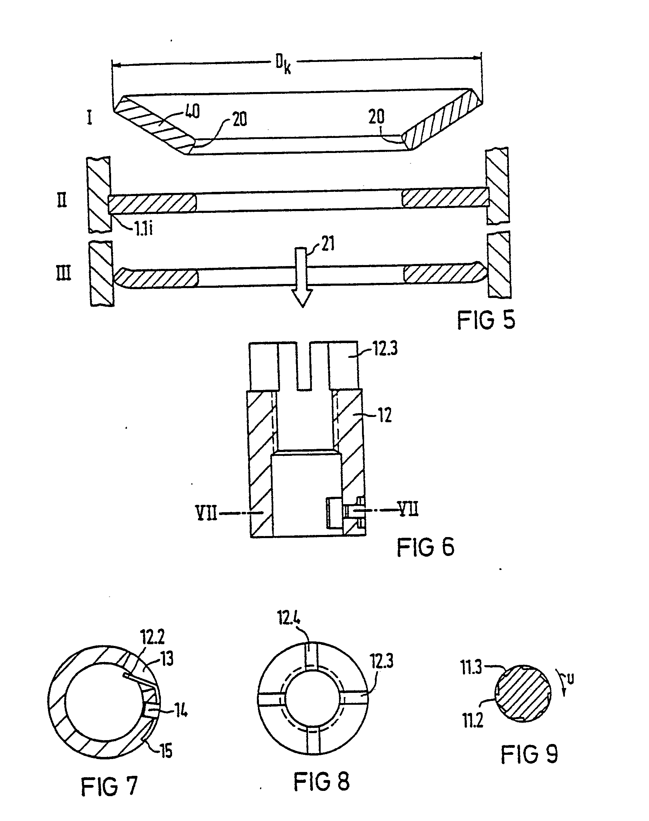

Fig. 14 mit einem Paket aus drei gleichgeschichteten Einzeltellern bzw. Stülpringen verminderter Stärke. Gemäß Fig. 7 ist die als Ganzes mit RV bezeichnete Rohrverschließeinrichtung an dem Rohrboden 1 eines nicht näher dargestellten Dampferzeugers für Druckwasser-Kernreaktoranlagen positioniert. Sie weist als Ganzes mit M bezeichnete Spannmittel zur Erzeugung einer axialen Relativverschiebung zwischen der Haltestange 2 und einer diese umgebenden Stützhülse 3 auf, wobei Haltestange 2 und Stützhülse 3 zusammen mit dem an der Haltestange 2 befestigten Rohrstopfen 4 in das Dampferzeugerrohr 1.1 eingeschoben sind. Dargestellt ist lediglich ein solches Dampferzeugerrohr; in Wirklichkeit sind eine Vielzahl solcher Rohre über den Rohrboden verteilt angeordnet zu denken, welche in entsprechenden Bohrungen des Rohrbodens druckdicht eingewalzt und mit ihren Enden mit diesem verschweißt sind. Bei den Haltemitteln M kann es sich um den Kopf eines geeigneten Manipulators handeln; diese sind lediglich schematisch dargestellt. Wesentlich ist die Erzeugung der Verschiebungskraft zwischen Haltestange 2 und der Stützhülse 3, wozu im dargestellten Ausführungsbeispiel Hydraulik- bzw. Pneumatikzylinder 5 vorgesehen sind, deren Kolben mit einem Druckteller 6 verbunden sind, der mit dem Kragen 6.1 eine Nabe 6.2 an der Stützhülse 3 angreift. Auf der anderen Seite der zweiseitig beaufschlagbare Kolben (die nicht dargestellt sind) aufweisenden Zylinder 5 ist eine Druckplatte 7 angeordnet, an der die die Hülse 3 zentrisch durchdringende Haltestange 2 verankert ist. Die Haltemittel M weisen ferner eine rohrbodenseitige Montageplatte 8 auf, welche über Spreizdorne o.dgl. an entsprechenden Dampferzeugerrohrmündungen zentriert befestigbar ist und die in entsprechenden Ausnehmungen 8.1 Führungszapfen 9 für den Druckteller 6 aufnehmen, an welch letzterem die Stangen der nicht ersichtlichen Kraftkolben angreifen. Durch die Druckplatte 7 ragen die Befestigungsspindeln 10 für die Zylinder 5; diese Spindeln 10 können auch als Stützbeine für die Rohrverschließeinrichtung bzw. die Haltemittel M benutzt sein. Dargestellt ist der Fall, daß die Stützhülse 3 relativ zur Haltestange 2 von den Kolben 5 in das Rohr 1.1 um ein gewisses Stück hineingedrückt werden kann, wobei die Haltestange 2 mittels der Verschraubung 2.1 an der Druckplatte 7 festgehalten wird. Zum Zwecke des Ziehens des Rohrstopfens 4 wäre es aber grundsätzlich auch möglich, über die Druckplatte 7 durch entsprechende Beaufschlagung der Zylinder 5 auf die Haltestange 2 Zugkräfte auszuüben. Der Abstand zwischen Druckteller 6 und Montageplatte 8 dient als Hubbegrenzung; er ist einstellbar.

Der Rohrstopfen 4 weist zur Erzeugung der abdichtenden Flächenpressung einen in seinem Außendurchmesser vergrößerbaren Stopfenmantel 4.1 und einen vom Stopfenmantel 4.1 umgebenen Stopfenkern 4.2 auf. Stopfenmantel und -kern 4.1, 4.2 sind, wie bereits angedeutet, relativ zueinander verschieblich, wodurch die Außendurchmesservergrößerung des Stopfenmantels 4.1 erzeugbar ist. Zu dem bereits beschriebenen, allgemein mit W bezeichneten Setzwerkzeug für den Rohrstopfen 4 gehören die mit dem Stopfenkern 4.2 lösbar verbundene Haltestange 2, die am Stopfenmantel 4.1 axial angreifende, von der Haltestange 2 durchdrungene Stützhülse 3 und die Spannmittel M.

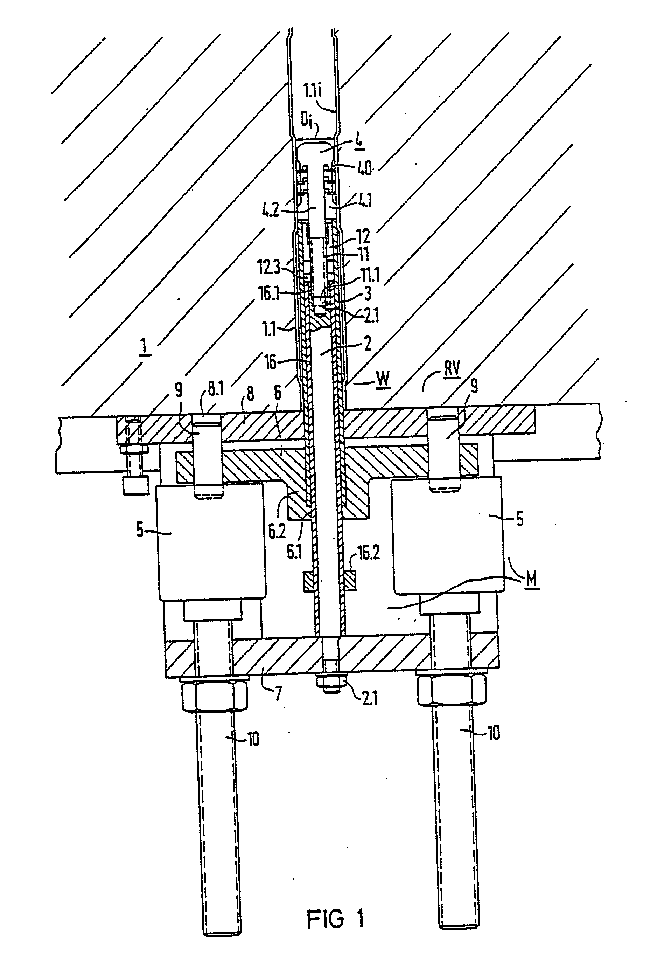

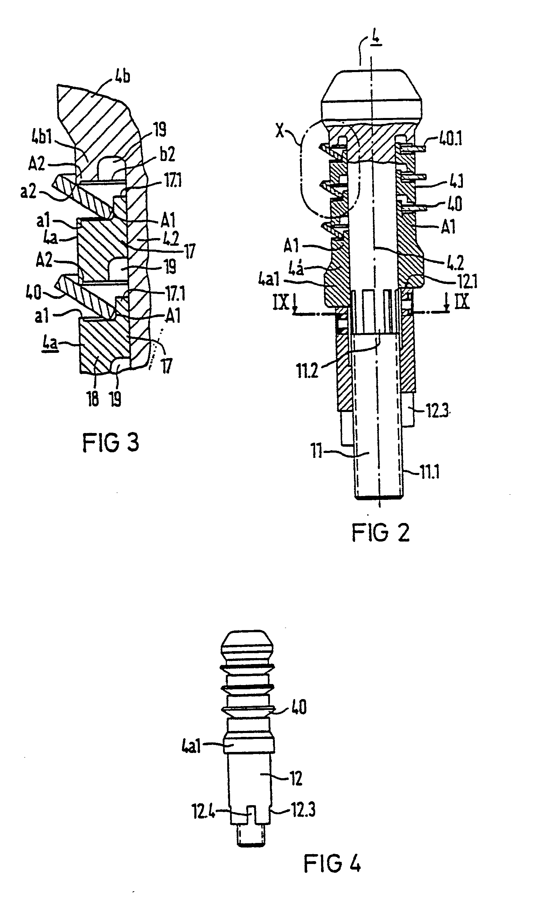

Wie es Fig. 2 bis 4 näher zeigen, sind als Dichtelemente des Stopfenmantels 4.1 koaxial zueinander angeordnete Stülpringe 40 vorgesehen, die zwischen Stopfenmantel 4.1 und Stopfenkern 4.2 so gelagert sind, daß sie ausgehend von ihrer entspannten, kegelig eingestellten Form (siehe linke Hälfte der Fig. 2, Fig. 3 und Fig. 4) mit einem Außendurchmesser $D_k$ (siehe Fig. 5), der kleiner oder höchstens gleich dem Rohrinnendurchmesser $D_i$ (siehe Fig.1) ist, durch Relativverschiebung zwischen Stopfenmantel 4.1 und -kern 4.2 in eine abgeflachte Form bringbar und in ihrem Außendurchmesser vergrößerbar sind (siehe rechte Hälfte der Fig. 2 und Fig- 1)' so daß sie sich mit ihrem Außenumfang 40.1 um ein geringes Stück in die Rohrinnenwand 1.1i (Fig. 1) dichtend eingraben.

Figuren 1 bis 4 zeigen, daß der Stopfenmantel 4.1 mehrere, im vorliegenden Fall drei, in rohraxialer Richtung zueinander beabstandete Stülpringe 40 aufweist, die an ihrem Innenumfang mit ersten Anschlagflächen A1 des in Stützscheiben 4a unterteilten Mantels 4.1 in Eingriff stehen. Im Bereich ihrer äußeren Ringzonen stehen die Stülpringe 40 mit zweiten Anschlagflächen A2 in Eingriff, welche an einem Kopfteil 4b des Stopfenkerns 4.2, d.h. an einem Ringkragenteil 4b1 desselben, und jeweils an den Stützscheiben 4a angeordnet sind. Die unterste Stützscheibe 4a' des Stopfenmantels 4.1 ist als längerer Ringkörper mit einem verdickten Führungshals 4a1 ausgeführt (Fig. 2, Fig. 4). Sie wird im folgenden als Endstück bezeichnet. Man erkennt durch einen Vergleich zwischen der linken und der rechten Hälfte der Fig. 2 daß bei Relativverschiebung von Stopfenkern 4.2 und -mantel 4.1 die abflachenden Spannkräfte von den ersten und zweiten Anschlagflächen A1, A2 auf die Stülpringe 40 übertragen werden. Zur Verbesserung des Kraftflusses und der Einspannung der Stülpringe 40 sitzen die zweiten Anschlagflächen A2, siehe Fig. 3, an einem schmalen, axial hervorstehenden Ringkragen a2, der durch eine Ausdrehung b2 erzeugt ist. Auch die gegenüberliegende Stützfläche der Stützscheiben 4a weist eine entsprechende Ausdrehung zur Ausbildung eines vorstehenden Ringkragens a1 auf.

Fig. 1 zeigt, daß der Stopfenkern 4.2 einen Gewindeschaft 17 aufweist, auf dessen Ende 11.1 die Haltestange 2 mit ihrem ein entsprechendes Innengewinde aufweisenden Ende 2.1 aufschraubbar ist. Auf dem Gewindeschaft 11 des Stopfenkerns 4.2 sitzt eine rohrförmige Haltemutter 12, welche zur Absicherung der Spannposition von Stopfenmantel 4.1 und -kern 4.2 mit stirnseitigen Anschlagflächen 12.1 gegen entsprechende Gegenflächen des Stopfenmantels 4.1, d.h. des Endstückes 4a, um den Betrag der Relativverschiebung nachführbar ist. Im rechten Teil der Fig.2 ist die Haltemutter 12 nachgeführt, in Fig. 1 besteht noch ein Axialspalt, sie ist dort also noch nicht vollständig nachgeführt. Die Haltemutter 12 ist gegen Losdrehen verdrehgesichert. Zu diesem Zweck weist der Gewindeschaft 11 einen äußeren Nutenkranz 11.2 auf (Fig. 2 und Fig. 9) it im Querschnitt etwa dreieckigen Nuten 11.3, in welche die Haltemutter 12, siehe die vergrößerte Darstellung in Fig. 6 bis 8, mit einer Sperrklinke 12.2 im Sinne eines Richtgesperres eingreifen kann. Die Sperrklinke 12.2 besteht aus einer stumpfwinklig abgewinkelten Blattfeder, deren freier Schenkel durch ein Fenster 13 am Umfang der Haltemutter 12 nach innen ragt, und deren Befestigungsschenkel innerhalb einer Vertiefung am Außenumfang der Mutter 12 versenkt angeordnet und dort mit einer Senkschraube oder einem Niet 14 befestigt ist, wobei das Ende dieses Befestigungsschenkels bei 15 noch festgeschweißt sein kann. In Nachstell-Drehrichtung ratscht die Mutter 12 mit der Sperrklinke 12.2 also in Uhrzeigerrichtung u (Fig. 9) über den Nutenkranz hinweg, wogegen die andere Drehrichtung durch die stellen Flanken der dreieckförmigen Aussparungen 11.3 blockiert ist.

Zur Drehung der Haltemutter 12 in Nachstellrichtung weist diese an ihrem äußeren Ende einen Zahnkranz 12.3 auf (siehe insbesondere Fig. 2, 6 und 8), welcher durch Schlitze oder Einfräsungen 12.4 gebildet wird, die im dargestellten Beispiel kreuzförmig angeordnet sind. Ein mit einem entsprechenden Gegenzahnkranz-Ende 16.1 versehenes Schraubrohr 16 ist innerhalb der Stützhülse 3 (siehe Fig. 1) über die Haltestange 2 schiebbar und mit dem Zahnkranz 12.3 kuppelbar. Das Schraubrohr 16 ist an der Haltestange 2 drehbar gelagert, es hat einen angeschweißten Mehrkantring 16.2 zum Ansetzen von Gewindeschlüsseln; es könnte jedoch auch fennbetätigt durch einen entsprechenden Servormotor gedreht werden.

Fig. 2 und Fig. 3 verdeutlichen, daß die axial aneinandergereiht auf dem Schaft des Stopfenkerns 4.2 sitzenden Stützscheiben 4a sowie das Endstück jeweils mit einem inneren Halsteil 17 auf dem Schaft des Stopfenkerns 4.2 gleitend geführt und an diesem Halsteil mit den ersten Anschlagflächen Al versehen sind. Die zweiten Anschlagflächen A2 sitzen dagegen an den axialen Ringfortsätzen der äußeren Kragenteile 18 zw. an dem Kragenteil 4b1 des Kopfes 4b. Bei der Ausführung nach den Figuren 1 bis 9 ist eine Ausbildung der Stützscheiben 4a sowie des Endstückes zugrundegelegt, bei der der Halsteil 17 auf seiner einen Seite einen angeformten Bördelring 17.1 hat, und dementsprechend auch das Endstück 4a. Dieser Bördelring 17.1 hat im gespannten Zustand, siehe rechte Hälfte der Fig. 2, ausreichend Platz in der ihm jeweils gegenüberliegenden Ringausnehmung 19, der jeweils benachbarten Stützscheibe 4a bzw. des Stopfenkopfes 4b. Deshalb ergibt sich für die Stützscheiben 4a ein etwa Z-förmiges Profil.

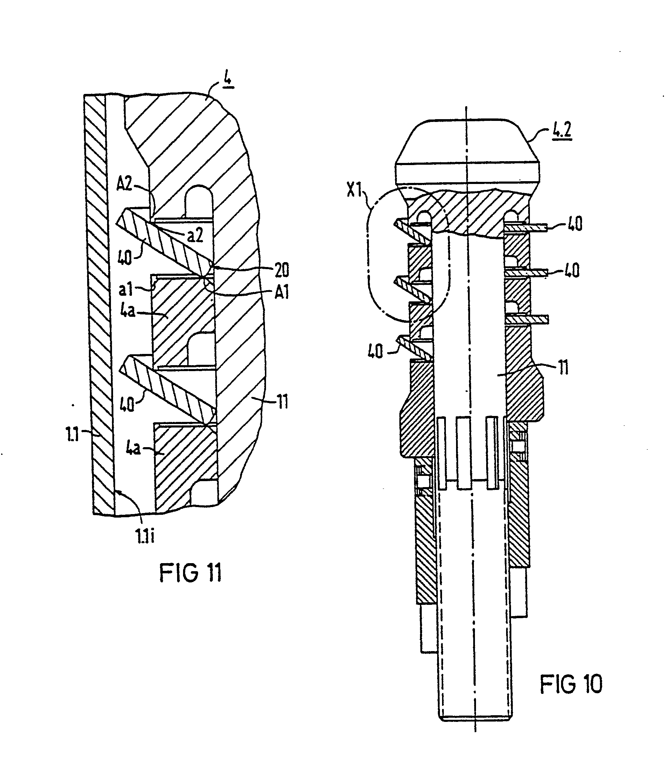

Fig. 10 und Fig. 11 zeigen eine erste Rohrstopfen-Variante zu der bisher beschriebenen Ausführung nach Fig. 7 bis 9, bei der die Stülpringe 40 mit ihrem vorzugsweise abgerundeten Innenumfang 20 direkt anliegend auf oder an dem Außenumfang des Schaftes 11 des Stopfenkerns 4.2 gelagert sind. Die Dichtheit an dieser Lagerstelle ergibt sich vorwiegend durch plastische Verformung der Stülpringe 40 und der Außenumfangbereiche des Schaftes 11. Weitere dichtende Anlageflächen für die Stülpringe 40 ergeben sich dadurch, daß sie mit ihrem Innenumfang auch an den ersten Anschlagflächen Al der Stützscheiben 4a anliegen. Bei 1.1 ist ebenso wie in Fig. 1 das den Rohrstopfen 4 umgebende Dampferzeugerrohr angedeutet, mit 1.1i sein Innenumfang bezeichnet. Im übrigen ergeben sich im Vergleich zur Ausführung nach Fig. 2 und 3 keine Besonderheiten, weshalb gleiche Teile auch mit den gleichen Bezugzeichen versehen sind. Der Vorteil der Ausführung nach Fig. 10 und 11 ist unter anderem, daß die Erstreckung der Stülpringe 40 in radialer Richtung größer ist als beim ersten Ausführungsbeispiel, so daß zum Spannen ein größerer Hub zur Verfügung steht.

Bei den Ausführungsbeispielen nach Figuren 12 bis 14 - die Darstellung ist wieder entsprechend der Fig. 11 bzw. der Fig. 3 - sind jeweils mindestens zwei Stülpringe 40 zwischen einander gegenüberliegenden Anschlagflächen des Stopfenkerns 4.2 und des Stopfenmantels 4.1 angeordnet, wobei die Stülpringe 40 wie bei einer Tellerfeder aneinander liegen. Bei dem Beispiel nach Fig. 12 ist ein Stülpringpaar 40,40 zwischen den beiden einander gegenüberliegenden Anschlagflächen A20 so angeordnet, daß die Stülpringe in ihrem Querschnitt jeweils von ihrem Innenumfang 20 zu ihrem Außenumfang 40.1 V-förmig auseinanderlaufen. Beim Spannen des Rohrstopfens werden die Stülpringe 40 gemäß Pfeilen fl um die Dicht- bzw. Ringkanten a1, a2 aufeinander zu geschwenkt, führen jedoch auch, wenn man unterstellt, daß der Stopfenkern 4.2 festgehalten und der Stopfenmantel 4.1 verschoben wird, eine translatorische Schabebewegung mit ihrem Innenumfang auf dem Außenumfang des Schaftes 11 des Rohrstopfens gemäß Pfeil f2 aus. Bis sie ihren endgültigen Dichtsitz am Innenumfang 1.1i des Wärmetauscherrohres 1.1 einnehmen, schaben aie auch am Innenumfang ein gewisses Stück entlang. Diese Schabebewegung hat bei diesem wie auch bei allen übrigen Ausführungsbeispielen den Vorteil, daß der Dichtsitz durch blank aneinandergepreßte plastisch deformierte Metallteile hergestellt wird. Die Anschlagflächen sind in Fig. 12 mit A20 bezeichnet, weil sie beide an den Stülpringen 40 in deren äußeren Ringzonen angreifen.

Beim Ausführungsbeispiel nach Fig. 13 laufen bei dem jeweiligen, zwischen zwei gegenüberliegenden Anschlagflächen A10 angeordneten Stülpringpaar 40,40 die Stülpringe jeweils von ihrem Innenumfang 20 zu ihrem Außenumfang 40.1 pfeil- oder dachartig zusammen. Die Anschlagflächen A10 greifen im Unterschied zur Figur 12 am Innenumfang 20 der Stülpringe 40 an. Beim Spannen ist gemäß Pfeilen f3 die Schwenkbewegung der Stülpringe 40 gegenläufig zu derjenigen nach Fig. 12. Auch die translatorische Schabebewegung ist gemäß Pfeilen f4 gegenläufig zu der gemäß Pfeilen f2 nach Fig. 12. Beim Ausführungsbeispiel nach Fig. 13 kann man zwischen den beiden Stülpringen 40 - so wie gestrichelt angedeutetnoch eine Zwischenstützscheibe 4a' in den V-förmigen Zwischenraum einfügen; das hat den Vorteil, daß die Schwenkbewegung der Stützringe 40 beim Spannen um die Dichtkanten a3 erfolgen muß, was eine zusätzliche Dichtungsstelle und einen besser definierten Schwenkvorgang ergibt. Im übrigen zeigt Fig. 13, daß im Anschluß an eine Stützscheibe 4a, die zum Stopfenmantel 4.1 gehört, eine gleichartige weitere V-förmige Stülpringanordnung sich axial anschließen kann. Dies gilt auch für die Anordnung nach Fig. 12, ebenso wie diejenige nach Fig. 14, die im folgenden noch erläutert wird.

Dabei sind mindestens zwei Stülpringe 40' nach Art eines Tellerfederpaketes mit gleichgeschichteten Einzeltellern aneinanderliegend und zwischen den ersten Anschlagflächen Al im Bereich ihres Innenumfanges und den zweiten Anschlagflächen A2 nahe ihrem Außenumfang gelagert. Die Stärke der einzelnen Stülpringe eines solchen Stülpringpaketes ist zweckmäßig geringer als bei den bisher beschriebenen Stülpring-Anordnungen, damit einerseits die Verformungskräfte und andererseits die Zugkräfte beim Wiederherausziehen des Stopfens nicht zu groß werden. Die Stärke der Stülpringe hängt von ihrer Anzahl pro Stülpringpaket ab. Fig. 14 zeigt ein solches Paket, bestehend aus drei gleichsinnig aneinanderliegenden Stülpringen. Unterhalb der Stützscheibe 4a'', welche die Anschlagflächen A2 mit entsprechenden Dichtkanten aufweist, ist ein einzelner gegenläufig orientierter Stülpring 40 dargestellt; stattdessen könnte spiegelbildlich zu dem Stülpringpaket ein weiteres Stülpringpaket vorgesehen sein, so daß sich die grundsätzliche Anordnung wie in Fig. 13, jedoch mit Stülpringpaketen, ergeben würde.

Die im folgenden anhand der Fig. 5 gegebenen Erläuterungen zur Verformung beim Spannen und beim Herausziehen der Stülpringe gelten grundsätzlich für alle Ausführungsbeispiele. Dort ist außer der ungespannten konischen Ausgangsposition I eines Stülpringes 40 die abgeflachte Dichtposition II eingezeichnet und ferner eine Position III, in der, wie es Pfeil 21 verdeutlicht, der Rohrstopfen und damit der Stülpring 40 in seiner Position II einer Zugkraft in Herausziehrichtung unterworfen wurde, so daß er sich mit seiner äußeren Umfangspartie entgegen der Herausziehrichtung umgebogen bzw. plastisch verformt hat. Der Stülpring 40 ist in dieser Position III vom Rohrinnenumfang 1.1i freigekommen, er kann nach der durchgeführten plastischen Verformung dann ohne großen Kraftaufwand herausgezogen werden. Bei Betrachtung von Fig. 2, d.h. deren rechte Hälfte, erkennt man, daß genügend axialer Zwischenraum zwischen den einander benachbarten Stülpringen 40 vorhanden ist, so daß die Verformung gemäß Position III ungehindert beim Zugvorgang erfolgen kann.

## Patentansprüche

1. Rohrverschließeinrichtung, insbesondere für Wärmetauscherrohre, mit einem Rohrstopfen, der zur Erzeugung der abdichtenden Flächenpressung einen in seinem Außendurchmesser vergrößerbaren Stopfenmantel und einen vom Stopfenmantel umgebenen Stopfenkern aufweist, wobei der relativ zum Stopfenkern verschiebliche Stopfenmantel als Dichtelemente koaxial über den Stopfenkern geschobene Stülpringe besitzt, die ausgehend von ihrer entspannten, kegelig eingestellten Form durch Relativverschiebung zwischen Stopfenmantel und -kern in eine abgeflachte Form bringbar und in ihrem Außendurchmesser vergrößerbar sind und mit einem in das jeweilige Wärmetauscherrohr einführbaren Setzwerkzeug für den Rohrstopfen, wobei das Setzwerkzeug mit dem Stopfenkern mittels einer lösbaren Haltestange gekuppelt und mit dem Stopfenmantel mittels einer von der Haltestange durchdrungegen Stützhülse in Eingriff bringbar ist und das Setzwerkzeug zur Erzeugung einer axialen Relativverschiebung zwischen Haltestange und Stützhülse und damit zwischen Stopfenmantel und -kern mit Spannmitteln ausgerüstet ist, dadurch gekennzeichnet, daß die Stülpringe (40) in rohraxialer Richtung durch Zwischenlage mindestens eines auf den Stopfenkern (4.2) aufgefädelten Stützringes (4a) voneinander beabstandet sind, die Stülpringe an ihrem Innenumfang (20) mit ersten Anschlagflächen (A 1) des Stopfenmantels, im Bereich ihrer äußeren Ringzonen mit zweiten Anschlagflächen (A 2) in Eingriff stehen, welche an einem Kopfteil (4b)des Stopfenkerns (4.2) oder jeweils am äußeren Umfang der Stützringe (4a) angeordnet sind, so daß die abflachenden Spannkräfte bei Relativverschiebung von Stopfenkern (4.2) und mantel (4.1) von den ersten und zweiten Anschlagflächen (A 1, A 2) auf die Stülpringe (40) übertragen werden.

2. Rohrverschließeinrichtung nach Anspruch 1, gekennzeichnet durch eine solche elastisch-plastische Verformbarkeit der Stülpringe (40), daß sie aus ihrer abgeflachten Dichtposition im Rohrinneren durch Aufbringen einer in Herausziehrichtung (21) wirkenden Zugkraft am Stopfenkern (4.2) über ein Zugelement insbesondere die Haltestange (2), aus dem Wärmetauscherrohr (1.1) herausziehbar sind, wobei die über den Stopfenmantel (4.1) überstehenden Ringpartien der Stülpringe (40) entgegen der axialen Stülpring-Zwischenräume umlegenden Ringpartien vom Rohrinnenumfang (1.1i) freikommen.

3. Rohrverschließeinrichtung nach einem der Ansprüche 1 oder 2, dadurch gekennzeichnet, daß der Stopfenkern (4.2) am freien Ende seines Schaftes (11) ein Gewinde (1 1.1) aufweist, auf welches die Haltestange (2) aufschraubbar ist.

4. Rohrverschließeinrichtung nach Anspruch 3, dadurch gekennzeichnet, daß auf dem Gewindeschaft (11) eine rohrförmige Haltemutter (12) sitzt, welche zur Absicherung der Spannpositionen von Stopfenmantel (4.1) und -kern (4.2) mit stirnseitigen Anschlagflächen (12.1) gegen entsprechende Gegenflachen des Stopfenmantels (4.1) um den Betrag der Relativverschiebung nachführbar ist.

5. Rohrverschließeinrichtung nach Anspruch 4, dadurch gekennzeichnet, daß die Haltemutter (12) gegen Losdrehen verdrehgesichert ist.

6. Rohrverschließeinrichtung nach Anspruch 5, dadurch gekennzeichnet, daß der Gewindeschaft (11) einen äußeren Nutenkranz (11.2) aufweist, in welchen die Haltemutter (12) mit einer Sperrklinke (12.2) im Sinne eines Richtgesperres eingreift.

7. Rohrverschließeinrichtung nach Anspruch 4, dadurch gekennzeichnet, daß die Haltemutter (12) an ihrem äußeren Ende einen Zahnkranz (12.3) aufweist und daß ein mit einem entsprechenden Gegenzahnkranz-Endc (16.1) versehenes Schraubrohr (16) innerhalb der Stützhülse (3) über die Haltestange (2) schiebbar und mit dem Zahnkranz (12.3) kuppelbar ist.

8. Rohrverschließeinrichtung nach Anspruch 1 oder 2, dadurch gekennzeichnet, daß die axial aneinandergereiht auf dem Schaft des Stopfenkerns (4.2) sitzenden Stützringes /4a) mit einem inneren Halsteil (17) auf dem Schaft des Stopfenkerns (4,2) gleitend geführt und an diesem Halsteil (17) mit den ersten Anschlagflächen (A 1) versehen sind und daß die Stützringe (4a) mit axialen Ringfortsätzen eines äußeren Kragenteils (18) die zweiten Anschlagflächen (A 2) bilden.

9. Rohrverschließeinrichtung nach Anspruch 1 bis 8, dadurch gekennzeichnet, daß der Kopf (4b) des Stopfenkerns (4,2) an einem äußeren Kragenteil (4b 1) zweite Anschlagflächen (A 2) für den obersten Stülpring (40) aufweist, und daß der unterste bzw. äußerste Stützring (4a) von einem Endstück (4a') des Stopfenmantels (4.1) gebildet ist, welches an den dem Stützringstapel zugewandten Stützflächen erste Anschlagflächen (A 1) für den untersten Stülpring (40) aufweist.

10. Rohrverschließeinrichtung nach Anspruch 1 bis 9, dadurch gekennzeichnet, daß die Stülpringe (40) mit ihrem vorzugsweise abgerundeten Innenumfang (20) direkt anliegend auf dem Außenumfang des Schaftes (11) des Stopfenkerns (4.2) gelagert sind und die Dichtheit an dieser Lagerstelle vorwiegend durch plastische Verformung des Stülpringes und des Schaftes (11) hergestellt ist.

11. Rohrverschließeinrichtung nach Anspruch 8 oder 9, dadurch gekennzeichnet, daß der Halsteil (17) der Stützringe (4a) bzw. des Endstücks (4a') auf der einen Seite mit einem Bördelring (17.1) versehen ist, der zusammen mit der anliegenden Stützring-Stirnfläche eine Nische zur dichtenden Lagerung des Stülpring-Innenumfangs bildet und der im gespannten Zustand des Rohrstopfens (4) von einer Ringausnehmung (19) des jeweils benachbarten Stützringes (4a) bzw. des Stopfenkopfes (4b) aufgenommen wird.

12. Rohrverschließeinrichtung nach Anspruch 1, dadurch gekennzeichnet, daß die Stülpringe (40) jeweils paarweise durch Zwischenlage eines Stützringes (4a) voneinander beabstandet sind, wobei die Stülpringe (40, 40') eines jeden Paares nach Art von Tellerfedern mit gleichen Seiten aneinander anliegen.

13. Rohrverschließeinrichtung nach Anspruch 12, dadurch gekennzeichnet, daß bei einem zwischen gegenüberliegenden Anschlagflächen (A 10) angeordneten Stülpringpaar (40) die Stülpringe jeweils von ihrem Innen- zu ihrem Außenumfang im Querschnitt pfeil- oder dachartig zusammenlaufen.

14. Rohrverschließeinrichtung nach Anspruch 12, dadurch gekennzeichnet, daß bei mindestens einem zwischen gegenüberliegenden Anschlagflächen angeordneten Stülpringpaar (40) die Stülpringe jeweils von ihrem Innen- zu ihrem Außenumfang V-förmig auseinanderlaufen.

15. Rohrverschließeinrichtung nach Anspruch 12, dadurch gekennzeichnet, daß mindestens zwei Stülpringe (40) nach Art eines Tellerfederpaketes mit gleichgeschichteten Einzeltellern aneinanderliegen und zwischen den ersten und zweiten Anschlagflächen (A 1, A 2) gelagert sind.

16. Rohrverschließeinrichtung nach einem der Ansprüche 1 bis 1 1 oder 15, dadurch gekennzeichnet, daß die zwischen den ersten und zweiten Anschlagflächen (A 1, A 2) gelagerten, in Stopfenachsrichtung jeweils zueinander benachbarten Stülpringe (40) bzw. Mehrfach-Stülpringe (40') abwechselnd gegensinnig, insbesondere spiegelbildlich gegensinnig, geneigt sind.


## Claims

1. A tube plugging apparatus, in particular for heat exchanger tubes, with a tube plug comprising a plug sleeve which can be enlarged in respect of its outer diameter in order to produce the sealing surface pressure and a plug core which is surrounded by the plug sleeve and which is displaceable relative to the plug core, where the plug sleeve has sealing elements in the form of cupped rings which can be positioned coaxially over the plug core, which, from their relaxed conical shape can be brought into a flattened shape by means of relative displacement between the plug sleeve and the plug core, and which can be enlarged in respect of their outer diameter by a setting tool for the tube plug, which tool can be introduced into the heat exchanger tube in question and is coupled to the plug core by means of a detachable stay bar and can be brought into engagement with the plug sleeve by means of a support sheath through which the stay bar passes, the setting tool being equipped with tensioning means in order to produce an axial relative shift between the stay bar and the support sheath and thus between the plug sleeve and the plug core, characterised in that, in the axial direction of this tube, the cupped rings (40) are spaced from one another by means of at least one support ring (4a) fitted over the plug core (4.2) and in that the cupped rings engage at their inner periphery (20) with first stop surfaces (Al) of the plug sleeve, whereas in the region of their outer zones they engage with second stop surfaces (A2) which are arranged on a head component (4b) of the plug core (4.2) or at the outer periphery of the support rings (4a) so that in the event of a relative displacement between the plug core (4.2) and the plug sleeve (4.1) the flattening tensioning forces are transferred from the first and second stop surfaces (A1,A2) to the cupped rings (40).

2. A tube plugging apparatus as claimed in claim 1, characterised by an elastic/plastic deformability of the cupped rings (40) which is such that from their flattened sealing position in the interior of the tube, they can be withdrawn from the heat exchanger tube (1.1) by the application of a tension force acting on the plug core (4.2) in the direction of withdrawal (21) via a drawing element, in particular the stay bar (2), where those parts of the cupped rings (40) which project beyond the plug sleeve (4.1) are deformable in opposition the the drawing direction (21) and those parts of the rings which move into the axial interspaces between the cupped rings are released from the inner periphery of the tube (1.1i).

3. A tube plugging apparatus as claimed in one of the claims 1 or 2, characterised in that the plug core (4.2) comprises a thread (11.1) at the free end of its shaft (11) and onto which the stay bar (2) can be screwed.

4. A tube plugging apparatus as claimed in claim 3, characterised in that a tubular retaining nut (12) is positioned on the threaded shaft (11) and can be screwed against the plug sleeve (4.1) via end stop surfaces (12.1) and corresponding counter surfaces of the plug sleeve (4.1) by the amount of the relative displacement of, and to secure,the plug sleeve (4.1) and plug core (4.2) in their tensioned positions.

5. A tube plugging apparatus as claimed in claim 4, characterised in that the retaining nut (12) is secured against loosening.

6. A tube plugging apparatus as claimed in claim 5, characterised in that the threaded shaft (11) has an outer grooved rim (11.2) into which the retaining nut (12) engages by means of a ratchet (12.2) in the manner of a directional locking mechanism.

7. A tube plugging apparatus as claimed in claim 4, characterised in that the retaining nut (12) has a toothed rim (12.3) at its outer end and in that a screw tube (16), provided with a corresponding counter toothed rim end (16.1), can be positioned over the stay bar (2) inside the support sheath (3) and can be coupled to the toothed rim (12.3).

8. A tube plugging apparatus as claimed in claim 1 or 2, characterised in that the support rings (4a), which are arranged in axial series on the shaft of the plug core (4.23), are slidable along the shaft of the plug core (4.2) on an inner neck component (17), they being provided with the first stop surfaces (A1) at this neck component (17), and in that the support rings (4a), together with axial ring projections of an outer collar component (18), form the second stop surfaces (A2).

9. A tube plugging apparatus as claimed in claim 1 to 8, characterised in that the head (4b) of the plug core (4.2) has two stop surfaces (A2) at an outer collar component (4b1) thereof for the uppermost cupped ring (40), and in that the lowest or outermost support ring (4a) is formed by an end component (4a') of the plug sleeve (4.1), which, at the support surfaces which face towards the stack of support rings, comprises first stop surfaces (Al) for the lowest cupped ring (40).

10. A tube plugging apparatus as claimed in claim 1 to 9, <u>characterised in</u> that the cupped rings (40) are mounted at their, preferably rounded, inner periphery (20) in direct contact with the outer periphery of the shaft (11) of the plug core (4.2), and at this bearing point the seal is mainly produced by a plastic deformation of the cupped ring and shaft (11).

11. A tube plugging apparatus as claimed in claim 8 or 9, <u>characterised in</u> that the neck component (17) of the support rings (40) and the end component (4a') are each provided on one side with a flanged ring (17.1) which, together with the adjacent support ring end surface, form a recess for bearing and sealing the inner periphery of the cupped ring, and which in the tensioned state of the tube plug (4) is accommodated in an annular recess (19) in the adjacent support ring (4a) or plug head (4b).

12. A tube plugging apparatus as claimed in claim 1, <u>characterised in</u> that the cupped rings (40) are each spaced from one another in pairs by means of a support ring (4a), where the cupped rings (40,40') of each pair contact one another on corresponding sides in the manner of cup springs.

13. A tube plugging apparatus as claimed in claim 12, <u>characterised in</u> that where a pair of cupped rings (40) is arranged between opposite stop surfaces (AIO), the cupped rings in each case converge from their inner to their outer periphery in the form of an arrow or roof in cross-section.

14. A tube plugging apparatus as claimed in claim 12, <u>characterised in</u> that where at least one pair of cupped rings (4) is arranged between opposite stop surfaces, the cupped rings in each case diverge in a V-formation from their inner to their outer periphery.

15. A tube plugging apparatus as claimed in claim 12, <u>characterised in</u> that at least two cupped rings (40) abut against one another in the manner of a stack of cup springs with identically stacked cups, and are mounted between the first and second stop surfaces (A1,A2).

16. A tube plugging apparatus as claimed in one of the claims 1 to 11 or 15, <u>characterised in</u> that the cupped rings (40) or multiple slip-on rings (40') which are mounted between the first and second stop surfaces (A1,A2) and which adjoin one another in the axial direction of the plug, are inclined variously in opposing directions, particularly alternately in opposing directions.

## Revendications

1. Dispositif d'obturation de tubes, notamment pour des tubes d'échangeurs de chaleur, comportant un bouchon tubulaire, qui comporte, en vue de l'obtention de la pression superficielle fournissant l'étanchéité, une enveloppe dont le diamètre extérieur peut être accru et un noyau entouré par l'enveloppe du bouchon, cette dernière, qui est déplaçable par rapport au noyau du bouchon, possédant, en tant qu'organes d'étanchéité, des bagues enfilables emmanchées coaxialement sur le noyau du bouchon et qui peuvent être amenées de leur forme étendue réglée de manière à être conique, en une forme aplatie par déplacement relatif entre l'enveloppe et le noyau du bouchon, et dont le diamètre extérieur peut être accru, et comportant un outil de montage, pouvant être inséré dans le tube respectif de l'échangeur de chaleur, pour le bouchon tubulaire, cet outil de montage étant accouplé au noyau du bouchon au moyen d'une tige de maintien détachable et pouvant être amené en prise avec l'enveloppe du bouchon au moyen d'une douille de support traversée par la tige de maintien, et étant équipé de moyens de serrage en vue de l'obtention d'un déplacement axial relatif entre la tige de maintien et la douille de support et par conséquent entre l'enveloppe et le noyau du bouchon, caractérisé par le fait que les bagues enfilables (40) sont maintenues à distance les unes des autres suivant la direction axiale du tube, moyennant l'interposition d'au moins une bague de support (4a) enfilée sur le noyau (4.2) du bouchon, que les bagues enfilables sont en prise avec des premières surfaces de butée (AI) de l'enveloppe du noyau, au niveau de leur pourtour intérieur (20) et avec des secondes surfaces de butée (A2) dans la région de leurs zones annulaires extérieures, lesquelles butées sont disposées sur une partie de tête (4b) du noyau (4.2) du bouchon ou bien respectivement sur le pourtour extérieur des bagues de soutien (4a) de telle sorte que les forces de serrage provoquant l'aplatissement sont transmises par les premières et secondes surfaces de butée (A1, A2) aux bagues enfilables (40), lors du déplacement relatif du noyau (4.2.) et de l'enveloppe (4.1) du bouchon.

2. Dispositif d'obturation de tubes selon la revendication 1, caractérisé par une déformabilité élasto-plastique des bagues enfilables (40) telle que ces bagues peuvent être tirées hors du tube (1.1) de l'échangeur de chaleur, à partir de leur position d'étanchéité aplatie à l'intérieur du tube par application d'une force de traction, agissant dans le sens de l'extraction (21) sur le noyau (4.2) du bouchon par l'intermédiaire d'un organe de traction, notamment la tige de maintien (2), les parties annulaires, qui font saillie par rapport à l'enveloppe (4.1) du bouchon, des bagues enfilables (40) étant déformables à l'encontre de la direction de traction (21) et dégageant du pourtour intérieur (1.1i) du tube, les parties des bagues, qui s'appliquent dans les espaces intercalaires axiaux entre les bagues enfilables.

3. Dispositif d'obturation de tubes suivant l'une des revendications 1 ou 2, caractérisé par le fait que le noyau (4.2) du bouchon comporte, sur l'extrémité libre de sa tige (11), un filetage (11.1) sur lequel la tige de maintien (2) peut être vissée.

4. Dispositif d'obturation de tubes suivant la revendication 3, caractérisée par le fait que sur la tige filetée (11) se trouve monté un ècrou tubulaire de retenue (12) qui, en vue de réaliser le blocage des positions serrées de l'enveloppe (4.1) et du noyau (4.2) du bouchon au moyen de surfaces frontales de butée (12.1) portant contre des surfaces antagonistes correspondantes de l'enveloppe (4.1) du bouchon, peut être serré de façon ajustée sur la distance du déplacement relatif.

5. Dispositif d'obturation de tube suivant la revendication 4, caractérisé par le fait que l'écrou de retenue (12) est bloqué contre tout desserrage en rotation.

6. Dispositif d'obturation de tubes suivant la revendication 5, caractérisé par le fait que la tige filetée (11) possède une couronne extérieure d'encoches (11.2) dans laquelle l'écrou de retenue (12) engrène au moyen d'un cliquet de blocage (12.2), à la manière d'un dispositif de blocage directif.

7. Dispositif d'obturation de tube suivant la revendication 4, caractérisé par le fait que l'écrou de retenue (12) comporte une couronne dentée (12.3) sur sa surface extérieure et qu'un tube de vissage (16), comportant une extrémité correspondante (16.1) formant couronne dentée antagoniste, est déplaçable à l'intérieur de la douille de support (3) par l'intermédiaire de la tige de maintien (2) et peut être accouplé à la couronne dentée (12.3).

· 8. Dispositif d'obturation de tubes suivant la revendication 1 ou 2, caractérisé par le fait que les bagues de support (4a), qui sont disposées axialement côte-à-côte sur l'arbre du noyau (4.23) du bouchon, sont guidées au moyen d'une partie intérieure en forme de col (17) de manière à pouvoir glisser sur la tige du noyau (4.2) du bouchon et sont munies, au niveau de cette partie en forme de col (17), de premières surfaces de butée (A1) et que les bagues de support (4a) forment avec des appendices saillants annulaires axiaux d'une partie extérieure en forme de collet (18) les secondes surfaces de butée (A2).

9. Dispositif d'obturation de tubes suivant les revendications 1 à 8, caractérisé par le fait que la tête (4a) du noyau (4.2) du bouchon comporte, au niveau d'une partie extérieure en forme de collet (4b1), deux surfaces de butée (A2) pour la bague enfilable (40) la plus élevée et que la bague de support (4a) qui est la plus basse ou la plus à l'extérieur, est formée par un organe en forme d'extrémité (4a') de l'enveloppe (4.1) du bouchon, qui comporte, sur les surfaces de soutien tournées vers la pile de bagues de support, des premières surfaces de butée (AI) pour la bague enfilable (40) la plus basse.

10. Dispositif d'obturation de tubes suivant les revendications 1 à 9, caractérisé par le fait que les bagues enfilables (40) sont montées, au moyen de leur pourtour interieur (20) de préférence arrondi, de manière à s'appliquer directement sur le pourtour extérieur de la tige (11) du noyau (4.2) du bouchon, et que l'étanchéité en cet emplacement de support est établie de façon prépondérante au moyen de la déformation plastique de la bague enfilable et de la tige (11).

11. Dispositif d'obturation de tubes suivant la revendication S ou 9, caractérisé par le fait que la partie en forme de col (17) des bagues de support (40) ou de l'organe d'extrémité (4a') est munie, d'un côté, d'un anneau à collerette (17.1) qui forme, avec la surface frontale de la bague de support, qui est appliquée contre lui, une niche permettant le soutien, avec étanchéité, du pourtour intérieur de la bague de support et qui, lorsque le bouchon (4) du tube est à l'état serré, est logée dans un évidement annulaire (19) de la bague de soutien (4a) respectivement voisine ou de la tête (4b) du bouchon.

12. Dispositif d'obturation de tubes suivant la revendication 1, caractérisé par le fait que les bagues enfilables (40) sont maintenues par couples à distance réciproque par interposition d'une bague de support (4a), les bagues enfilables (40, 40') de chaque couple s'appliquant l'une contre l'autre par leurs faces identiques, à la manière de rondelles Belleville.

13. Dispositif d'obturation du tube suivant la revendication 12, caractérisé par le fait que dans le cas d'un couple de bagues de support de support (40), qui sont disposées entre des surfaces de butée (AIO) en vis-à-vis, les bagues de support convergent respectivement depuis leur pourtour intérieur en direction de leur pourtour extérieur à la manière d'une flèche ou d'un toit en coupe transversale.

14. Dispositif d'obturation de tubes suivant la revendication 12, caractérisé par le fait que dans le cas d'au moins un couple de bagues de support (4) disposées entre des surfaces de butée en vis-à-vis, les bagues de support s'écartent respectivement depuis leur pourtour intérieur en direction de leur pourtour extérieur, avec la forme d'un V.

15. Dispositif d'obturation de tubes suivant la revendication 12, caractérisé par le fait qu'au moins deux bagues de support (40) sont appliquées l'une contre l'autre à la manière d'un paquet de rondelles Belleville comportant des rondelles individuelles montées l'une contre l'autre dans le même sens, et sont soutenues entre les premières et secondes surfaces de butée (AI, A2).

16. Dispositif d'obturation de tubes suivant l'une des revendications 1 à 11 ou 15, caractérisé par le fait que les bagues enfilables (40) ou des bagues enfilables multiples (40'), qui sont montées entre les premières et secondes surfaces de butée (A1, A2) et sont réciproquement voisines suivant la direction axiale du bouchon, sont inclinées en alternance en des sens opposés, et notamment en des sens symétriquement opposés.

FIG 1

FIG 3

FIG 2

FIG 4

FIG 5

FIG 6

FIG 7

FIG 8

FIG 9

FIG 11

FIG 10

FIG 12

FIG 13

FIG 14